(19) **Europäisches Patentamt European Patent Office Office européen des brevets**

(11) **EP 2 488 799 B1**

(12) **FASCICULE DE BREVET EUROPEEN**

(45) Date de publication et mention
de la délivrance du brevet:
**03.12.2014 Bulletin 2014/49**

(21) Numéro de dépôt: **10763709.2**

(22) Date de dépôt: **12.10.2010**

(51) Int Cl.:
*F24J 2/07* (2006.01)     *F24J 2/46* (2006.01)
*F28F 13/06* (2006.01)     *F28F 13/12* (2006.01)

(86) Numéro de dépôt international:
**PCT/EP2010/065251**

(87) Numéro de publication internationale:
**WO 2011/045301 (21.04.2011 Gazette 2011/16)**

(54) **RÉCEPTEUR SURFACIQUE SOLAIRE MODULAIRE TEXTURÉ FONCTIONNANT À HAUTE TEMPÉRATURE**

TEXTURIERTER MODULARER SOLARFLÄCHENREZEPTOR MIT BETRIEB BEI HOHEN TEMPERATUREN

MODULAR HIGH TEMPERATURE SOLAR SURFACE ABSORBER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.10.2009 FR 0957204**

(43) Date de publication de la demande:
**22.08.2012 Bulletin 2012/34**

(73) Titulaire: **Centre National de la Recherche Scientifique (CNRS) 75016 Paris (FR)**

(72) Inventeurs:
• **OLALDE, Gabriel**
  **F-66120 Odeillo (FR)**
• **FLAMANT, Gilles**
  **F-66800 Llo (FR)**
• **DAGUENET, Xavier**
  **F-68250 Pfaffenheim (FR)**
• **TOUTANT, Adrien**
  **F-66180 Villeneuve De La Raho (FR)**
• **FOUCAUT, Jean-Marc**
  **F-59810 Lesquin (FR)**
• **COUDERT, Sébastien**
  **F-59110 La Madeleine (FR)**

(74) Mandataire: **Regimbeau
20, rue de Chazelles
75847 Paris Cedex 17 (FR)**

(56) Documents cités:
**WO-A1-01/61254     WO-A1-2004/023048
FR-A1- 2 911 997**

EP 2 488 799 B1

**Description**

La présente invention concerne le domaine des récepteurs solaires utilisés dans les systèmes solaires thermodynamiques à très haute température.

Ces systèmes, appelés aussi héliothermodynamiques, permettent la transformation d'un rayonnement solaire en énergie thermique. Cette énergie peut être récupérée directement, ou utilisée pour la production d'électricité ou l'alimentation de réactions chimiques.

Le plus classique de ces systèmes héliothermodynamiques est la centrale à tour. Un tel système est constitué d'une tour et d'un champ de miroirs mobiles appelés héliostats qui concentre le rayonnement sur une zone réduite au sommet de la tour.

Cette zone éclairée par le rayonnement concentré reçoit plusieurs centaines de fois l'énergie normale solaire, et est équipée d'un dispositif appelé récepteur solaire qui a pour fonction de transmettre cette énergie à un fluide (un liquide ou un gaz) caloporteur pour réchauffer directement ou indirectement de l'air ou de la vapeur qui alimentera une turbine pour la production d'électricité, ou une solution chimique qui est le siège de réactions.

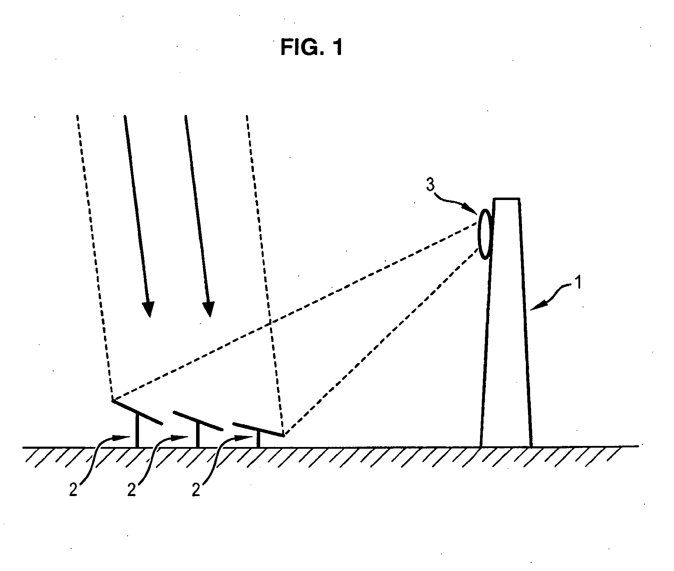

On a ainsi représenté figure 1 une centrale thermodynamique à tour comprenant la tour 1, un champ d'héliostats 2, et le récepteur solaire 3.

Ces récepteurs sont les éléments-clés de telles centrales, car leurs performances sont directement dépendantes de l'aptitude des récepteurs à absorber puis transmettre l'énergie du rayonnement, et leur coût constitue une part non négligeable de la centrale entière. Branche prometteuse des énergies renouvelables, le solaire thermique ne peut devenir une alternative sérieuse à la production d'électricité conventionnelle (énergies fossiles, nucléaire...) qu'à condition :

- d'atteindre d'excellents rendements ;
- de réduire les coûts de construction et d'entretien ;
- de s'inscrire dans une stratégie industrielle.

Divers récepteurs ont été proposés pour remplir efficacement cette fonction.

Des récepteurs connus de l'homme de l'art utilisent des éléments métalliques qui sont chauffés sous l'effet du rayonnement solaire auxquels ils sont exposés. Mais ces récepteurs ne peuvent pas dépasser 700°C. Le rendement en est limité. De plus ces systèmes classiques utilisent généralement un fluide à base de sels fondus pour leur bonne capacité thermique. Par ailleurs ces sels sont polluants et seul l'air ou la vapeur peuvent être utilisés dans une turbine. Un échangeur supplémentaire est requis.

Le document WO04023048 propose un récepteur comprenant des éléments poreux en céramique irradiés par le rayonnement solaire concentré, à travers lesquels l'air ambiant circule et atteint de très hautes températures. Cependant pour être utilisable, cet air doit être pompé ou doit réchauffer un autre circuit à travers un échangeur comme dans le cas des sels fondus, d'où une conception complexe.

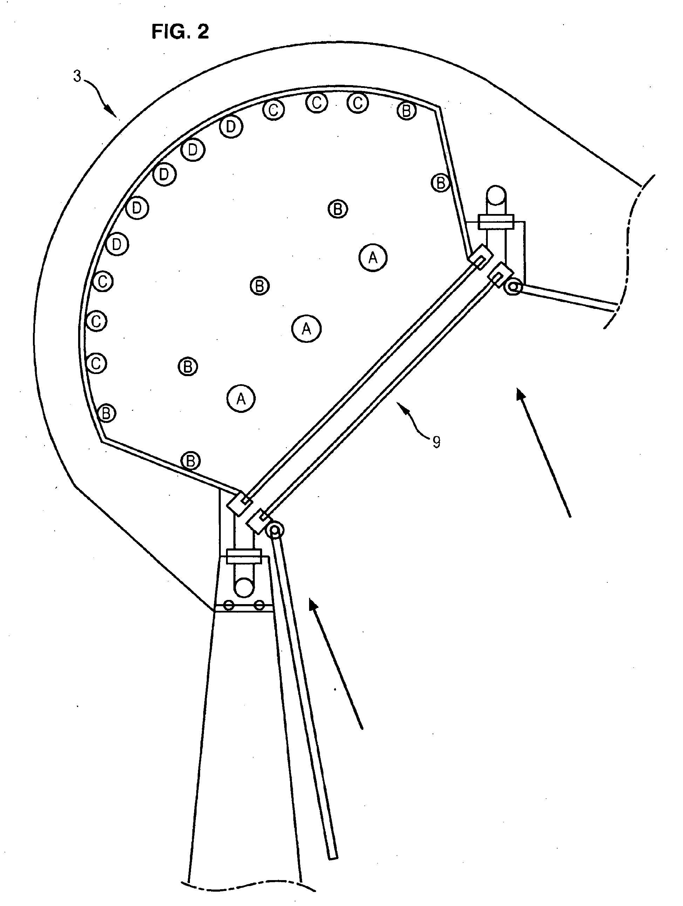

Les documents US4164123, WO9612918 et US6516794 décrivent divers systèmes de récepteurs solaires volumiques, chacun comprenant entre autres une chambre étanche avec un hublot dans laquelle un fluide sous pression traverse un élément poreux en céramique irradié à travers le hublot 9, comme l'on peut voir sur la figure 2. Des températures de 750°C à 1000°C peuvent être atteintes, mais le hublot est cher et limite la fiabilité, et surtout il ne permet pas d'aller vers des récepteurs de grande taille nécessaire pour des applications de plusieurs MW.

Le document WO200161254 décrit un module de récepteur solaire volumique, dont la paroi est creuse et remplie d'un élément poreux similaire à ceux des documents cités précédemment. Cet élément poreux augmente les transferts thermiques de la paroi, même s'ils restent limités, et à condition que le module respecte une forme paraboloïde bien spécifique, un échange thermique direct entre la paroi irradiée et le fluide qui y circule devient possible. Toutefois, l'élément poreux crée de fortes pertes de charge (le fluide doit être pompé en permanence, d'où un coût énergétique), et devient insuffisant en tant qu'échangeur thermique dès que le module dépasse une certaine taille.

Malgré ces moyens connus de l'état de la technique, les centrales solaires thermodynamiques à four restent limitées à des démonstrateurs, et peinent à faire l'objet de grands projets.

En effet les limitations des récepteurs restent très grandes, et même si les récepteurs à haute température offrent des perspectives nouvelles, les pertes tant thermiques que mécaniques dans la circulation empêchent le solaire thermodynamique d'être concurrentiel.

Pour toutes ces raisons, ces centrales restent à perfectionner avant de pouvoir se faire une place parmi les centrales à énergie renouvelable.

La présente invention vise à résoudre ces difficultés en proposant un récepteur solaire surfacique qui, par une structure modulaire simple, permet de travailler à haute température avec de bonnes performances, et est compatible avec une taille industrielle.

Un but annexe de l'invention est de parvenir à cet objectif tout en obtenant un système moins cher que ce qui se fait selon l'état de la technique.

La présente invention se rapporte donc à un module de récepteur surfacique solaire fonctionnant à haute température, traversé d'un canal le long duquel s'effectue un transfert thermique entre un fluide (liquide ou gaz) en mouvement dans ledit canal et au moins une paroi du récepteur exposée au rayonnement solaire concentré, caractérisé en ce que la surface interne d'au moins ladite paroi comprend au niveau de l'entrée de fluide des actuateurs générant des turbulences.

Par cette structure de module absorbeur étanche, un fonctionnement sur des gaz à haute pression ne nécessitant pas de hublot est possible. En effet, grâce à la texturation de la surface du canal dans lequel circule le gaz, notamment les actuateurs, des turbulences sont générées sans augmenter significativement les pertes de charges. Les tourbillons d'axe longitudinal ainsi générés augmentent très fortement le niveau de turbulence et donc les transferts convectifs entre le gaz et la paroi directement exposée au rayonnement solaire concentré. L'absorption d'énergie est surfacique et non volumique comme dans les systèmes antérieurs.

De plus, le module conforme à la présente invention est un système simple qui remplit directement les fonctions d'échangeur thermique tout en s'affranchissant des pertes mécaniques dues par exemple à la traversée d'un élément poreux.

Selon d'autres caractéristiques avantageuses et non limitatives de l'invention :

- le module comprend des nervures situées selon l'écoulement en aval des actuateurs pour canaliser les turbulences et réduire les frottements ;
- les actuateurs sont des ailettes formant un léger angle avec l'axe d'écoulement et présentant un bord d'attaque partant de la surface et s'en écartant en suivant l'écoulement ;
- les actuateurs sont des triangles rectangles orthogonaux à la surface ;
- les actuateurs sont orientés alternativement de part et d'autre de l'axe d'écoulement selon une disposition contrarotative ;
- les actuateurs présentent une hauteur comprise entre 1/3 et 2/3 de la longueur de leur base, préférentiellement la moitié ;
- l'angle desdits actuateurs avec l'axe d'écoulement est en valeur absolue compris entre 10° et 20°, préférentiellement 18°.
- la distance entre deux ensembles de deux actuateurs vaut entre 1,5 et 2,5 fois la longueur de leur base, préférentiellement le double ;
- les nervures sont des structures parallèles s'étendant longitudinalement le long de l'écoulement ;
- les nervures sont des profils parallélépipédiques ;
- les nervures sont des canaux demi-cylindriques ;
- les nervures sont des profils prismatiques à section triangulaire ;
- les nervures sont biseautées en amont ;
- l'angle dudit biseau des nervures est inférieur à 7°;
- l'écart entre l'axe de deux nervures consécutives est un multiple de la hauteur des actuateurs ;
- le module comprend une nervure alignée avec l'axe médian entre chaque paire d'actuateurs ;
- le module comprend une nervure alignée avec l'extrémité aval de chaque actuateur ;
- l'écart selon la direction d'écoulement entre la fin des actuateurs et le début des nervures vaut entre une et trois fois la hauteur des actuateurs, préférentiellement deux fois ;
- les actuateurs et les nervures définissent une veine unique sans subdivisions pour mieux répartir le débit.
- le module est constitué d'un bloc en U recouvert d'un couvercle liés de façon étanche, et d'embouts en entrée et sortie.
- Le module est en céramique, préférentiellement en carbure de silicium.
- lesdits actuateurs et nervures sont réalisés par usinage du bloc.

Un autre aspect de l'invention se rapporte à un récepteur solaire, caractérisé en ce qu'il comprend un bouclier réflecteur isolant thermiquement délimitant un volume dont le fond est constitué de la paroi exposée d'au moins un module conforme à une ou plusieurs des caractéristiques précédentes, et une ouverture en face dudit fond.

Ce système n'a pas la contrainte du hublot limitant sa taille, puisque seule une ouverture dans la structure du bouclier thermique est nécessaire, un module étant étanche. Un telle architecture rend possible la conception d'une centrale de grande puissance (plusieurs dizaines de MW) pour un coût raisonnable.

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 précédemment décrite est un schéma d'une centrale solaire thermodynamique à tour connue ;
- la figure 2 est une vue schématique en coupe d'un récepteur connu de l'art antérieur ;
- la figure 3 est une vue en perspective tridimensionnelle d'un module possible selon l'invention ;

- la figure 4 est une vue en perspective d'une disposition possible des actuateurs selon l'invention;
- la figure 5 représente schématiquement une combinaison possible d'actuateurs et de nervures selon l'invention ;
- la figure 6 est une vue schématique de dessus d'une structuration préférentielle de la surface interne du récepteur selon l'invention ;
- la figure 7 est un graphique représentant l'évolution de l'énergie cinétique turbulente adimensionnée en fonction de la hauteur adimensionnée lors de campagnes de mesures sur différentes géométries ;
- La figure 8 est un graphique représentant la distribution de vitesse moyenne sur une vue de profil d'une structuration préférentielle ;
- La figure 9 est une vue schématique en coupe d'un récepteur solaire selon l'invention.

Le module 100 conforme à l'invention est un boitier comprenant un canal 101. Ce boitier peut faire l'objet de nombreux modes de réalisations, et avantageusement a la forme d'un parallélépipède aplati. Dans le canal 101 circule l'air comprimé qui va absorber l'énergie, le module étant pourvu d'une entrée 102 et d'une sortie 103. De l'hydrogène ou de l'hélium sont toutefois envisageables comme moyens caloporteurs, ainsi que la plupart des gaz pouvant alimenter des réacteurs thermochimiques. Le module 100 peut par exemple être le siège de réactions de vapocraquage. Une face externe 104 est celle qui sera tournée vers les héliostats 2 afin de recevoir le rayonnement concentré. L'envers de cette face, la surface interne 105 est texturée.

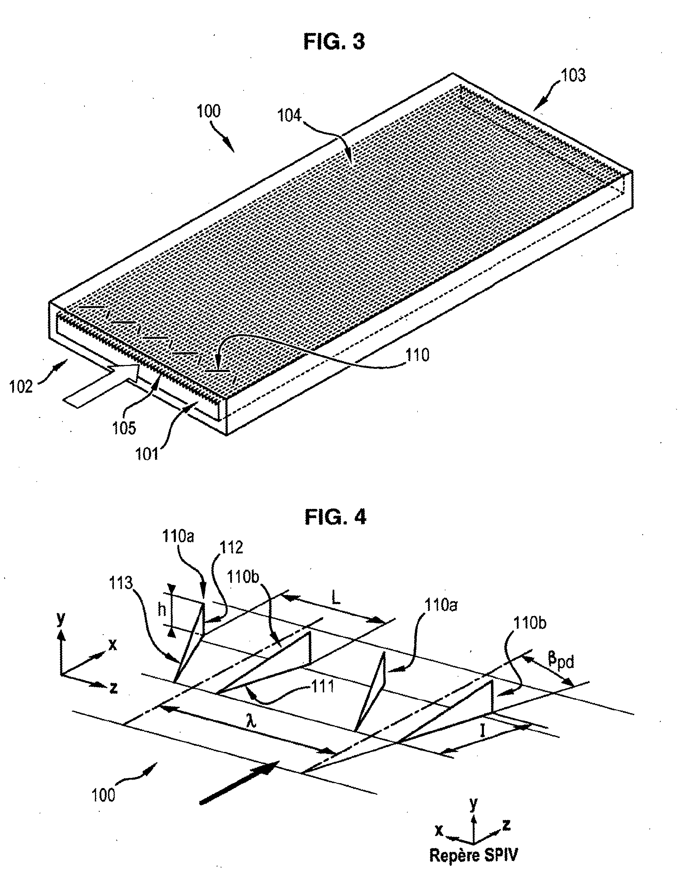

Ces texturations se composent d'actuateurs 110 dont on peut voir la structure figure 4. Ils sont disposés sur une bande en entrée du canal 101. Les actuateurs sont des petites ailettes qui ont un rôle de déflecteur. En effet ils ne sont pas parfaitement alignés avec l'axe d'écoulement et présentent un bord d'attaque 113 qui part de la surface interne 105 et s'en écarte en suivant l'écoulement. Cette inclinaison des actuateurs 110 dévie le flux, ce qui génère un tourbillon d'axe longitudinal en sortie de chaque actuateur 110.

Selon un mode de réalisation préférentiel mais non limitatif, les actuateurs peuvent être en forme de triangles rectangles, ceux-ci étant raccordés à la paroi 105 par leur base 111 de longueur l, le petit coté 112 de longueur h s'élevant orthogonalement à cette paroi 105. Dans cette configuration, ils présentent leur coté biseauté 113 qui est l'hypoténuse du triangle en direction de l'entrée 102 du module 100. Le coté 112, qui forme la queue de l'actuateur, se trouve en direction de la sortie. Deux actuateurs consécutifs 110a et 110b forment un motif qui se répète par translation sur toute la largeur de la paroi selon un pas $\lambda$. Les actuateurs 110a et 110b sont écartés de l'axe longitudinal du module 100 ou axe d'écoulement du fluide respectivement d'un faible angle $\beta$ et d'un angle - $\beta$. L'ouverture ainsi faite entre les deux cotés verticaux 112 extrêmes d'une paire 110a/110b d'actuateurs a pour mesure L. L'alternance de l'orientation des actuateurs 110 conduit à l'alternance des sens de rotation des tourbillons générés, la déviation moyenne du flux étant nulle. Une telle géométrie, appelée contrarotative, minimise l'augmentation des pertes de charge.

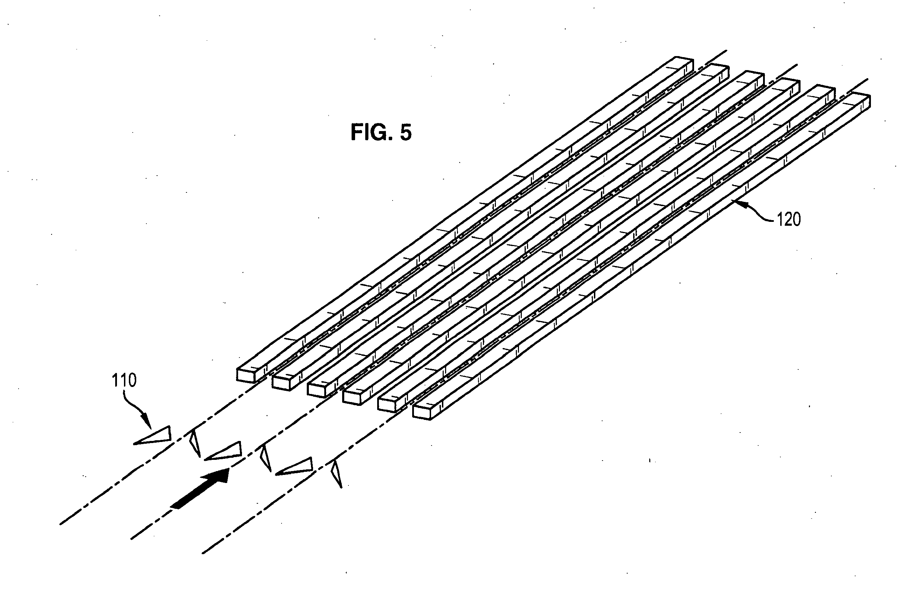

Cette architecture est avantageusement complétée par des structures 120 appelées nervures, de l'anglais « riblets », dont un mode de réalisation est représenté sur la figure 5. Les nervures sont des profils s'étendant sur la paroi 105 le long de l'axe d'écoulement, et situés en aval des actuateurs 110 de façon à définir des canaux 130 dans lesquels les tourbillons générés par les actuateurs sont entretenus le long du module 100. Ces tourbillons viennent lécher tangentiellement le fond des canaux 130 et les parois 121 des nervures, décuplant les coefficients d'échange conducto-convectif entre la paroi 105 et le fluide circulant dans le canal 101. Le transfert surfacique devient suffisant pour absorber l'énergie du rayonnement concentré. De plus, les nervures 120 n'opposent que peu de surface au flux du fluide, et n'augmentent donc que faiblement le frottement du fluide et donc les pertes de charge.

Plusieurs formes de nervures 120 sont envisageables, notamment les prismes, les parallélépipèdes et les canaux hémisphériques.

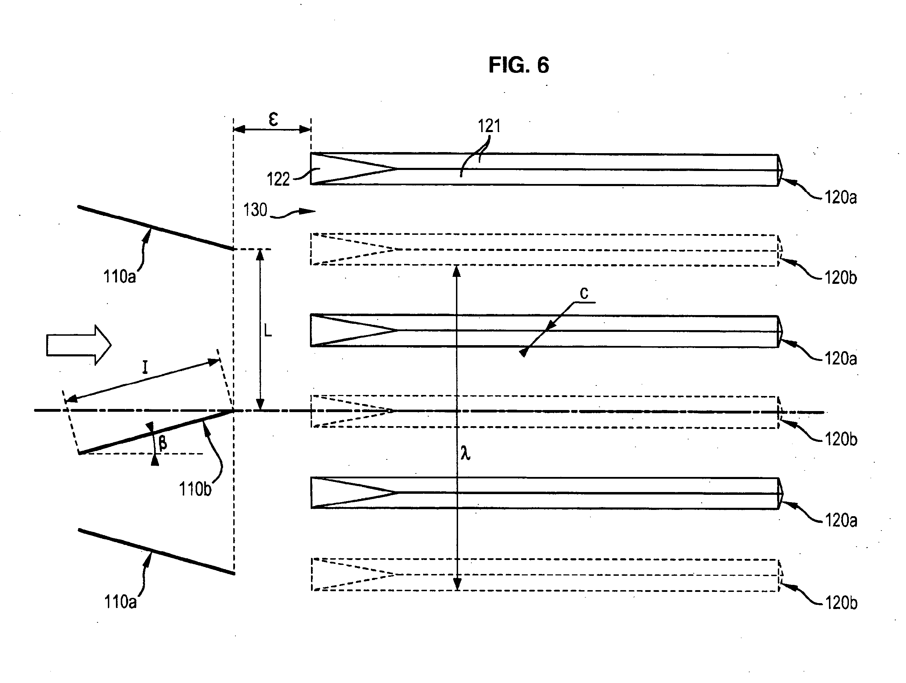

Selon un mode de réalisation préférentiel visible figure 6, ces nervures 120 sont des prismes ayant pour section un triangle rectangle isocèle de coté c, l'hypoténuse étant contre la paroi 115. Ils possèdent donc deux flancs opposés 121. Les nervures 120 sont écartées de la queue 112 des actuateurs 110 d'une longueur $\varepsilon$, et débutent par une partie 122 biseautée selon un angle $\alpha$. Ce biseau 122 adoucit l'impact du flux incident contre la section des nervures 120. Elles se prolongent ensuite jusqu'au bout du module 100. Concernant leur disposition, les nervures 120 forment un motif qui se répète par translation sur toute la largeur de la paroi selon le même pas $\lambda$ que les actuateurs. Celles-ci peuvent être alignées avec l'axe médian entre une paire 110a/110b d'actuateurs consécutifs (nervures 120a) et/ou alignées avec les queues 112 des actuateurs 110 (nervures 120b). Deux nervures 120a ou deux nervures 120b sont séparées d'une distance égale au paramètre L d'écart entre deux queues 112 d'actuateurs 110a/110b.

Selon une première possibilité d'agencement, on n'utilise que les nervures 120a pour ne pas opposer de résistance aux tourbillons dont les axes sont dans l'alignement des queues 112. Le motif se compose donc de 2 nervures.

Selon une deuxième possibilité d'agencement, on complète la structure précédente avec les nervures 120b pour obtenir une structure alternée, le motif se composant ainsi de 4 nervures. La surface d'échange entre la paroi 105 et le fluide circulant dans le canal 101 est donc augmentée.

Par ailleurs, le Demandeur a testé dans la soufflerie du Laboratoire de Mécanique de Lille différentes valeurs des paramètres l, L, h, $\alpha$, $\beta$, $\varepsilon$ et $\lambda$ et les deux agencements proposés. Une technique de *SPIV* (Stereoscopic Particle Image Velocimetry) utilisant principalement un laser et deux caméras numériques a été utilisée. Cette technique permet la mesure des trois composantes de la vitesse instantanée du fluide, sous forme de champs dans le plan.

En particulier, pour le module réel, les propriétés de l'écoulement sont les suivantes :

vitesse moyenne : $7.8\,\mathrm{m}.s^{-1} \leq \bar{u} \leq 15.6\,\mathrm{m}.s^{-1}$

Reynolds : $50000 \leq \mathrm{Re} = \dfrac{\rho\bar{u}D_h}{\mu} \leq 120000$ pour de l'air sous P=10 bars, T=400°C, $D_h$ diamètre hydraulique du module.

Compte tenu des dimensions de la veine ($2\times1$ m$^2$), la soufflerie du LML ne peut pas être considérée comme un canal plan (écoulement non établi) ; c'est une soufflerie de couche limite.

Cependant dans la zone interne, d'épaisseur $\delta = \dfrac{20}{100}.\Delta \approx 0.3\mathrm{m}$ ($\Delta$ est l'épaisseur de la couche limite), les équations sont les mêmes que dans le cas du canal plan si l'on travaille avec le même Re. Pour information, dans les CNTP (Conditions Normales de Température et de Pression), si l'on considère que $\delta$ est la longueur caractéristique, on a Re = 61000 pour $\bar{u} = 3\,m.s^{-1}$, ce qui correspond à la plage de variation du Reynolds pour le module « réel ».

Il est donc possible de déduire les caractéristiques de l'écoulement dans le module réel à partir des mesures de SPIV réalisées sur différentes géométries à la soufflerie du LML. Afin de comparer les différentes géométries entre elles, deux indicateurs ont été retenus : l'énergie cinétique turbulente $K$ (représentative des échanges thermiques) ainsi que la vitesse de frottement $u_\tau$ (représentative des pertes de charge). Les fichiers de statistique nécessaires au calcul de ces grandeurs ont été établis à partir des images de SPIV moyennées temporellement et selon l'axe z (sur une longueur représentant une demi-période du motif de base, afin que les résultats puissent permettre de comparer les géométries entre elles).

> Définition de $u_\tau$

Étant donné que les pertes de charge ne sont pas mesurables directement sur la soufflerie du LML, il a été choisi, à partir des données mesurées, de remonter à la vitesse de frottement $u_\tau$ (en m/s). Le calcul est rendu possible par le fait que, dans le cas de la soufflerie du LML, la contrainte de cisaillement n'est pas fonction de $x_2 = y$ et est donnée par :

$$\tau(x_2) = \mu.\frac{\partial u_1}{\partial x_2} - \rho.\langle u_1'.u_2' \rangle = cste = \tau_{p1}$$

avec $\tau_{pl} = \rho.u_\tau^2$, $\langle u_1'.u_2' \rangle$ covariance des fluctuations de la vitesse selon les axes $x_1$ et $x_2$ (aussi appelée « shear stress »).

> Définition de $K$

La formule donnant l'énergie cinétique turbulente, directement calculable à partir du fichier de statistiques, est la suivante :

$$K = \frac{\langle u_1'^2 \rangle + \langle u_2'^2 \rangle + \langle u_3'^2 \rangle}{2}$$

avec $\langle u_i'^2 \rangle$ variance des fluctuations de vitesse (en m$^2$/s$^2$).

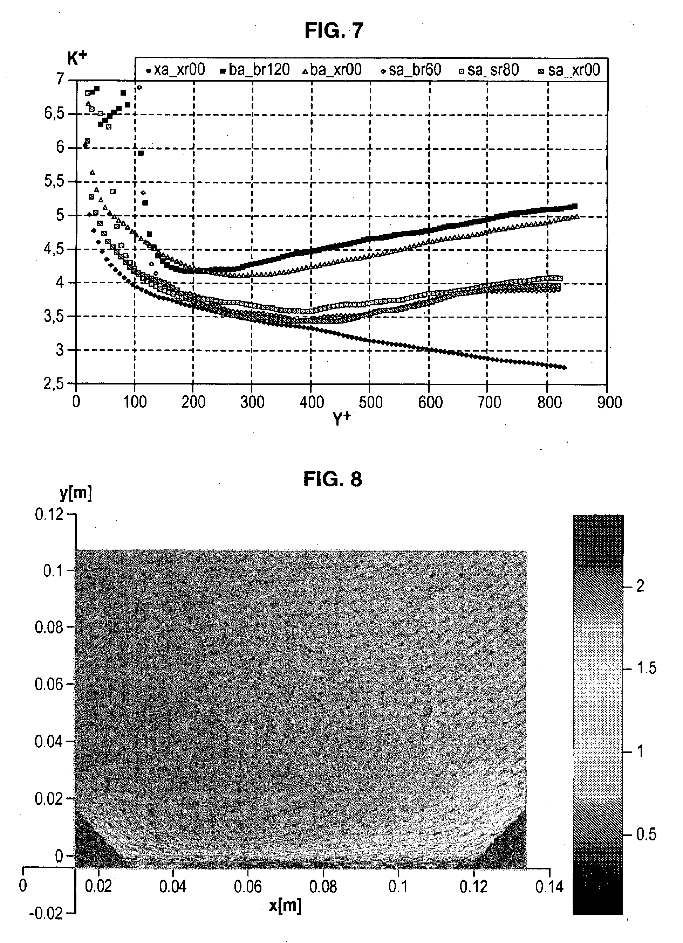

Le figure 7 représente $K^+ = K/u_\tau^2$ pour les différentes géométries en fonction de la hauteur adimensionnelle $y^+ = \dfrac{y*u_\tau}{\nu}$, et permet de mettre en évidence une géométrie préférentielle pour laquelle le rapport de l'énergie portée par la turbulence $K$ sur le frottement (responsable des pertes de charge) $u_\tau$ est maximal.

Celle-ci, référencée ba_br120, correspond à un agencement tel que :

- les nervures 120b sont absentes
- $\lambda = 4h$
- $l = 2h$
- $\beta = 18°$
- $\alpha < 7°$
- $c = h/3$
- $L = l$
- $\varepsilon = h$

A l'échelle de la soufflerie, la longueur h retenue dont découlent les autres dimensions est 60mm, hauteur qu'il faut extrapoler proportionnellement aux dimensions réelles du module 100, qui avantageusement présente une surface d'environ 1m$^2$ pour la paroi 104.

Cette efficacité est confirmée par le graphique de la figure 8. Les composantes du vecteur vitesse moyenne pour la géométrie ba_br120 sont tracées dans la fenêtre d'analyse, et le caractère tourbillonnant apparaît clairement, ainsi que dans d'autres calculs de vorticité effectués par le Demandeur.

Ce raisonnement concerne naturellement la paroi 105 dont l'autre face 104 subit l'irradiation solaire concentré. En plus d'améliorer les performances thermodynamiques, ces structurations augmentent la surface d'échange thermique avec le fluide. Les actuateurs 110 et nervures 120 peuvent être disposés sur toute la largeur du canal 101, y compris près des bords. Deux demi-nervures extrêmes placées dans les angles sont envisageables. Il est aussi envisageable de structurer les autres parois internes du canal 101.

Préférentiellement mais pas limitativement, le module 100 est issu d'un bloc de Carbure de Silicium, matériau en totale adéquation avec l'application solaire citée : forte absorption dans le spectre solaire (0,6-3$\mu$m), conductivité thermique supérieure aux métaux au-delà de 1000°C, résistance à l'oxydation, et bonne tenue mécanique jusqu'à des températures de l'ordre de 1400°C. D'autres céramiques hautes performances peuvent être envisagées.

Un tel matériau est tout d'abord moulé et comprimé sous 2000 bars. Il a alors la dureté d'un pain de craie et peut facilement être usiné avec grande précision. Une pièce est donc creusée afin d'avoir la forme d'un U au fond duquel les structurations vont être réalisées. Les actuateurs 110 et nervures 120 sont directement taillés en relief sur la paroi. Un couvercle correspondant à la paroi opposée vient recouvrir le U pour former le canal 101, l'union et l'étanchéité étant assurées par exemple par une brasure spécifique ou du frittage SPS. Ces techniques de réalisation de céramiques hautes performances sont connues de l'homme de l'art, et la réalisation d'un module selon l'invention n'est pas limitée à ce procédé en particulier.

Enfin il est possible d'envisager l'utilisation de plusieurs modules 100, afin d'obtenir une structure de grande taille. En effet les foyers de concentration des tours solaires font généralement plusieurs mètres carrés, et on peut imaginer d'aller plus loin dans des applications industrielles.

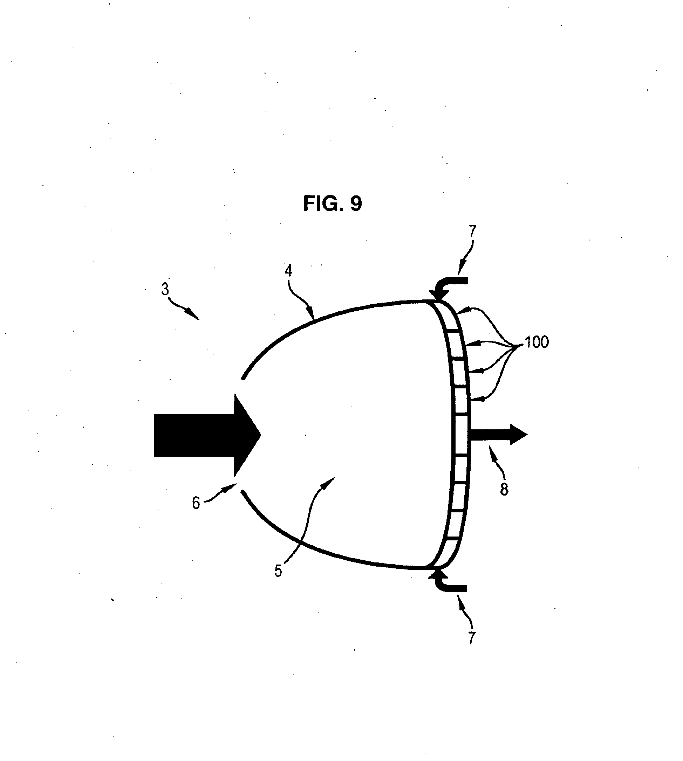

Un récepteur solaire 3 complet selon un autre aspect de l'invention représenté figure 9 comprend avantageusement en combinaison au moins un module élémentaire 100 et un bouclier réflecteur isolant 4. Ce bouclier 4 tapisse l'intérieur d'une ogive présentant une ouverture 6 à son sommet pour laisser entrer le rayonnement, et ayant le récepteur comme fond. L'intérieur de l'ogive est appelé la cavité solaire 5, laquelle peut atteindre des tailles conséquentes grâce à la modularité du récepteur. Dans cette cavité, le bouclier 4 renvoie le rayonnement réfléchi sur les parois 104 des modules 100 pour réduire au maximum la dissipation d'énergie vers l'extérieur. Des entrées de fluide multiples 7 alimentent les modules 100 en fluide froid, lequel sort à très haute température par une sortie 8 en direction des turbines de production d'électricité.

Le module et le récepteur solaire selon l'invention permettent donc des progrès sensibles aussi bien dans la qualité des transferts thermiques que dans la fiabilité ou les coûts de construction. On s'affranchit de nombreux organes coûteux et générateurs de pertes. De par sa structure simple et robuste qui permet une modularité innovante, l'invention ouvre la porte à des projets d'ampleur dans le domaine des centrales héliothermodynamiques.

**Revendications**

1. Module (100) de récepteur surfacique solaire fonctionnant à haute température, traversé d'un canal (101) le long duquel s'effectue un transfert thermique entre un fluide (liquide ou gaz) en mouvement dans ledit canal (101) et au moins une paroi (104) du récepteur exposée au rayonnement solaire concentré, **caractérisé en ce que** la surface interne (105) d'au moins ladite paroi comprend au niveau de l'entrée (102) de fluide des actuateurs (110) générant des turbulences.

2. Module selon la revendication 1, caractérisé en qu'il comprend des nervures (120) situées selon l'écoulement en aval des actuateurs (110) pour canaliser les turbulences et réduire les frottements.

3. Module selon la revendication 2, caractérisé en ce lesdits actuateurs (110) sont des ailettes formant un léger angle avec l'axe d'écoulement et présentant un bord d'attaque (113) partant de la surface (105) et s'en écartant en suivant l'écoulement.

4. Module selon la revendication 3, caractérisé en ce lesdits actuateurs (110) sont des triangles rectangles orthogonaux à la paroi (105).

5. Module selon l'une des revendications 3 à 4, **caractérisé en ce que** lesdits actuateurs (110) sont orientés alternativement de part et d'autre de l'axe d'écoulement selon une disposition contrarotative.

6. Module selon la revendication 5, caractérisé en ce lesdits actuateurs (110) présentent une hauteur (h) comprise entre 1/3 et 2/3 de la longueur (1) de leur base (111), préférentiellement la moitié.

7. Module selon l'une des revendications 2 à 6, **caractérisé en ce que** lesdites nervures (120) sont des structures parallèles s'étendant longitudinalement le long de l'écoulement.

8. Module selon la revendications 7, **caractérisé en ce que** lesdits nervures (120) sont biseautées en amont.

9. Module selon l'une des revendications 7 et 8, **caractérisé en ce que** l'écart entre l'axe de deux nervures consécutives (120a/120b) est un multiple de la hauteur (h) des actuateurs (110).

10. Module selon la revendication 9, **caractérisé en ce qu'**il comprend une nervure (120a) alignée avec l'axe médian entre chaque paire d'actuateurs (110a/110b).

11. Module selon la revendication 10, **caractérisé en ce qu'**il comprend une nervure (120b) alignée avec l'extrémité aval (112) de chaque actuateur (110).

12. Module selon l'une des revendications précédentes, **caractérisé en ce que** les actuateurs (110) et les nervures (120) définissent une veine unique sans subdivisions pour mieux répartir le débit.

13. Module selon l'une des revendications précédentes, **caractérisé en ce qu'**il est constitué d'un bloc en U recouvert d'un couvercle liés de façon étanche, et d'embouts en entrée (102) et sortie (103).

14. Module selon la revendication 13, **caractérisé en ce qu'**il est en céramique, préférentiellement en carbure de silicium.

15. Récepteur solaire (3), **caractérisé en ce qu'**il comprend un bouclier réflecteur isolant (4) délimitant un volume (5) dont le fond est constitué de la paroi exposée (104) d'au moins un module (100) selon l'une des revendications précédentes, et une ouverture (6) en face dudit fond.

**Patentansprüche**

1. Modul (100) für einen Solarflächenrezeptor für den Betrieb bei hohen Temperaturen, das von einem Kanal (101) durchzogen wird, entlang dem eine Wärmeübertragung zwischen einem Fluid (Flüssigkeit oder Gas), das in dem Kanal (101) in Bewegung ist, und wenigstens einer Wand (104) des Rezeptors, die der konzentrierten Sonnenstrahlung ausgesetzt ist, stattfindet, **dadurch gekennzeichnet, dass** die Innenfläche (105) wenigstens der Wand im Bereich des Eintritts (102) des Fluids Umsetzer (110) umfasst, die Verwirbelungen erzeugen.

2. Modul nach Anspruch 1, **dadurch gekennzeichnet, dass** es Rippen (120) umfasst, die in Strömungsrichtung hinter den Umsetzern (110) liegen, um die Verwirbelungen zu kanalisieren und die Reibungsvorgänge zu verringern.

3. Modul nach Anspruch 2, **dadurch gekennzeichnet, dass** die Umsetzer (110) Flügel sind, die einen leichten Winkel mit der Strömungsrichtung bilden und die einen Angriffsrand (113) aufweisen, der an der Fläche (105) beginnt und sich in Strömungsrichtung von dieser entfernt.

4. Modul nach Anspruch 3, **dadurch gekennzeichnet, dass** die Umsetzer (110) rechtwinklige Dreiecke sind, die orthogonal zur Wand (105) stehen.

**5.** Modul nach einem der Ansprüche 3 bis 4, **dadurch gekennzeichnet, dass** die Umsetzer (110) entlang der Strömungsrichtung sich gegenüberstehend abwechselnd ausgerichtet sind, und dies in einer gegenläufig drehenden Anordnung.

**6.** Modul nach Anspruch 5, **dadurch gekennzeichnet, dass** die Umsetzer (110) eine Höhe (h) haben, die zwischen 1/3 und 2/3 der Länge (I) ihrer Basis (111) beträgt und vorzugsweise die Hälfte.

**7.** Modul nach einem der Ansprüche 2 bis 6, **dadurch gekennzeichnet, dass** die Rippen (120) parallele Strukturen sind, die sich in Längsrichtung entlang der Strömung erstrecken.

**8.** Modul nach Anspruch 7, **dadurch gekennzeichnet, dass** die Rippen (120) in Strömungsrichtung vorne angeschrägt sind.

**9.** Modul nach einem der Ansprüche 7 und 8, **dadurch gekennzeichnet, dass** der Abstand zwischen den Achsen zweier aufeinanderfolgender Rippen (120a/120b) ein Vielfaches der Höhe (h) der Umsetzer (110) beträgt.

**10.** Modul nach Anspruch 9, **dadurch gekennzeichnet, dass** es eine Rippe (120a) umfasst, die mit der Mittelachse zwischen jedem Umsetzerpaar (110a/110b) ausgerichtet ist.

**11.** Modul nach Anspruch 10, **dadurch gekennzeichnet, dass** es eine Rippe (120b) umfasst, die mit dem in Strömungsrichtung hinteren Ende (112) jedes Umsetzers (110) ausgerichtet ist.

**12.** Modul nach einem der vorhergehenden Ansprüche, **dadurch gekennzeichnet, dass** die Umsetzer (110) und die Rippen (120) eine einzige Ader ohne Unterteilung definieren, um den Durchfluss besser aufzuteilen.

**13.** Modul nach einem der vorhergehenden Ansprüche, **dadurch gekennzeichnet, dass** es durch einen U-förmigen Block gebildet wird, der durch einen Deckel abgedeckt ist, der auf abdichtende Weise verbunden ist, sowie durch Eingangsstücke (102) und Ausgangsstücke (103).

**14.** Modul nach Anspruch 13, **dadurch gekennzeichnet, dass** es aus Keramik besteht und vorzugsweise aus Siliciumkarbid.

**15.** Solarrezeptor (3), **dadurch gekennzeichnet, dass** er eine isolierende reflektierende Schale (4) umfasst, die ein Volumen abgrenzt, dessen Hinterseite durch die ausgesetzte Wand (104) wenigstens eines Moduls (100) nach einem der vorhergehenden Ansprüche gebildet wird, sowie eine Öffnung (6), die der Hinterseite gegenüberliegt.

**Claims**

**1.** Solar surface receptor module (100) operating at high temperature, traversed by a channel (101) along which a heat transfer occurs between a fluid (liquid or gas) moving in said channel (101) and at least one wall (104) of the receptor exposed to concentrated solar radiation, **characterised in that** the inner surface (105) of at least said wall comprises turbulence-generating actuators (110) at the fluid inlet (102).

**2.** Module according to claim 1, **characterised in that** it comprises ribs (120) situated along the flow downstream of the actuators (110) to channel the turbulences and reduce friction.

**3.** Module according to claim 2, **characterised in that** said actuators (110) are fins forming a slight angle with the axis of flow and having a leading edge (113) starting from the surface (105) and moving away from it while following the flow.

**4.** Module according to claim 3, **characterised in that** said actuators (110) are rectangle triangles orthogonal to the wall (105).

**5.** Module according to one of claims 3 to 4, **characterised in that** said actuators (110) are oriented alternately on either side of the axis of flow according to a contra-rotating arrangement.

**6.** Module according to claim 5, **characterised in that** said actuators (110) have a height (h) comprised between 1/3 and 2/3 of the length (1) of their base (111), preferentially half.

7.  Module according to one of claims 2 to 6, **characterised in that** said ribs (120) are parallel structures extending longitudinally along the flow.

8.  Module according to claim 7, **characterized in that** said ribs (120) are bevelled upstream.

9.  Module according to one of claims 7 and 8, **characterised in that** the gap between the axis of two consecutive ribs (120a/120b) is a multiple of the height (h) of the actuators (110).

10. Module according to claim 9, **characterized in that** it comprises a rib (120a) aligned with the median axis between each pair of actuators (110a/110b).

11. Module according to claim 10, **characterized in that** it comprises a rib (120b) aligned with the downstream end (112) of each actuator (110).

12. Module according to one of the previous claims, **characterized in that** the actuators (110) and the ribs (120) define a unique vein without subdivisions to better distribute the flow.

13. Module according to one of the previous claims, **characterized in that** it is constituted of a U-shaped block covered with a lid connected in a sealed manner, and inlet (102) and outlet (103) end pieces.

14. Module according to claim 13, **characterized in that** it is made of ceramic, preferentially silicon carbide.

15. Solar receptor (3), **characterised in that** it comprises an insulating reflecting shield (4) delimiting a volume (5), the bottom of which is constituted of the exposed wall (104) of at least one module (100) according to one of the preceding claims, and an opening (6) facing said bottom.

## FIG. 1

FIG. 2

## FIG. 3

## FIG. 4

Repère SPIV

FIG. 5

FIG. 6

**FIG. 7**

**FIG. 8**

**FIG. 9**

**EP 2 488 799 B1**

## RÉFÉRENCES CITÉES DANS LA DESCRIPTION

**Documents brevets cités dans la description**

- WO 04023048 A
- US 4164123 A
- WO 9612918 A
- US 6516794 B
- WO 200161254 A